Europäisches Patentamt

European Patent Office

Office européen des brevets

(19)

(11) Publication number: **0 013 502**
**B1**

## (12) EUROPEAN PATENT SPECIFICATION

(45) Date of publication of patent specification: 14.09.83

(21) Application number: 79302982.8

(22) Date of filing: 20.12.79

(51) Int. Cl.³: **F 16 D 66/02,**
**F 16 D 55/224,**
**F 16 D 65/56**

(54) A disc brake lining-wear indicator.

(30) Priority: 29.12.78 US 974283

(43) Date of publication of application:
23.07.80 Bulletin 80/15

(45) Publication of the grant of the patent:
14.09.83 Bulletin 83/37

(84) Designated Contracting States:
DE GB IT

(56) References cited:
FR - A - 2 341 783
GB - A - 704 300
US - A - 3 055 456
US - A - 3 966 028
US - A - 4 064 973

(73) Proprietor: EATON CORPORATION
100 Erieview Plaza
Cleveland Ohio 44114 (US)

(72) Inventor: Urban, John Arthur
18892 Mayfield
Livonia, Michigan 48152 (US)

(74) Representative: Slight, Geoffrey Charles et al,
Graham Watt & Co. Riverhead
Sevenoaks Kent TN13 2BN (GB)

Courier Press, Leamington Spa, England

A disk brake lining-wear indicator

This invention relates to a disc brake assemblage comprising a housing structure including a caliper housing section carrying inboard and outboard brake pads adapted to coact with the opposite faces of a brake disc secured to a wheel of an associated vehicle and including inboard and outboard web portions to be disposed generally normal to the wheel axis of the associated vehicle on opposite sides of the brake disc, and a generally tubular housing section extending axially inwardly from the inboard face of said inboard web portion, a push rod mounted within said tubular housing section for reciprocal brake apply and release movement along a line of action generally parallel to said axis and having a free, outboard end projecting through an aperture in said inboard web portion, a bridge bar on the free outboard end of said push·rod adapted to press the inboard brake pad against the inboard face of a brake disc in response to brake apply movement of an actuator member, in use of the assemblage. Such an assemblage is described in US—A—3,966,028.

It is known from FR—A—2,341,783 to provide an indicator pin having its outboard end positively positionally related to the inboard face of said inboard pad and extending axially from that end to project its inboard end axially inwardly of said housing structure and thereby provide, as a function of the length of pin exposed, a measure of the remaining thickness of the brake pads in use of the assemblage.

This invention aims to cheapen the construction of a disc brake assemblage as described at the beginning of this specification, the assemblage having an indicator pin for indicating brake pad wear.

According to this invention the disc brake assemblage is characterised by means defining a generally axially extending through bore in said inboard web portion radially outwardly of said tubular housing section and an indicator pin having its outboard end secured to said bridge bar and extending axially from that end through said bore to provide bearing support for the outboard end of said push rod and to project its inboard end axially inwardly from the inboard face of said inboard web portion radially outwardly of said tubular housing section and thereby provide, as a function of the length of pin exposed, a measure of the remaining thickness of the brake pads in use of the assemblage.

By allowing the indicator pin to also function as a bearing support for the outboard end of the push rod, thereby eliminating the need for the conventional outboard bearing means, the construction of the assemblage is cheapened.

As further described in US—A—3,966,028, the push rod may have a coacting threaded member threadably engaging the push rod at a location thereon inboard of said outboard end, the threaded member comprising an adjuster nut forming a component of a self adjusting mechanism of the brake assemblage. In this case, said indicator pin, being secured at its outboard end to said bridge bar provides a means of precluding rotation of said push rod to enable axial movement of said push rod in response to rotation of said coacting threaded member. This eliminates the need for the conventional anti-rotation means between the backing plate of the brake pad and the bridge bar, thereby further cheapening the construction.

Conveniently, a pair of indicator pins are secured to the bridge bar, one adjacent each end of the bar, and the pins extend through bores in the inboard web of the caliper on opposite sides of the tubular housing section.

One way of carrying out the invention is described in detail below with reference to drawings which illustrate only one specific embodiment and in which:—

Figure 1 is a side elevational view, looking from inboard to outboard, of an air disc brake including a disc brake assemblage of the present invention;

Figure 2 is a cross-sectional view taken on line 2—2 of Figure 1;

Figure 3 is a view, partially in section, looking in the direction of the arrow 3 in Figure 1; and

Figure 4 is a view on an enlarged scale of the structure within the circle 4 of Figure 3.

The figures show an air brake including a torque plate 10, a caliper 12, a brake disc 14, and an actuator assembly 15.

Torque plate 10 includes a central opening 16 adapted to pass the axle housing of an associated vehicle and a plurality of bolt holes 18 for use in fastening the torque plate to a suitable flange on the vehicle axle housing.

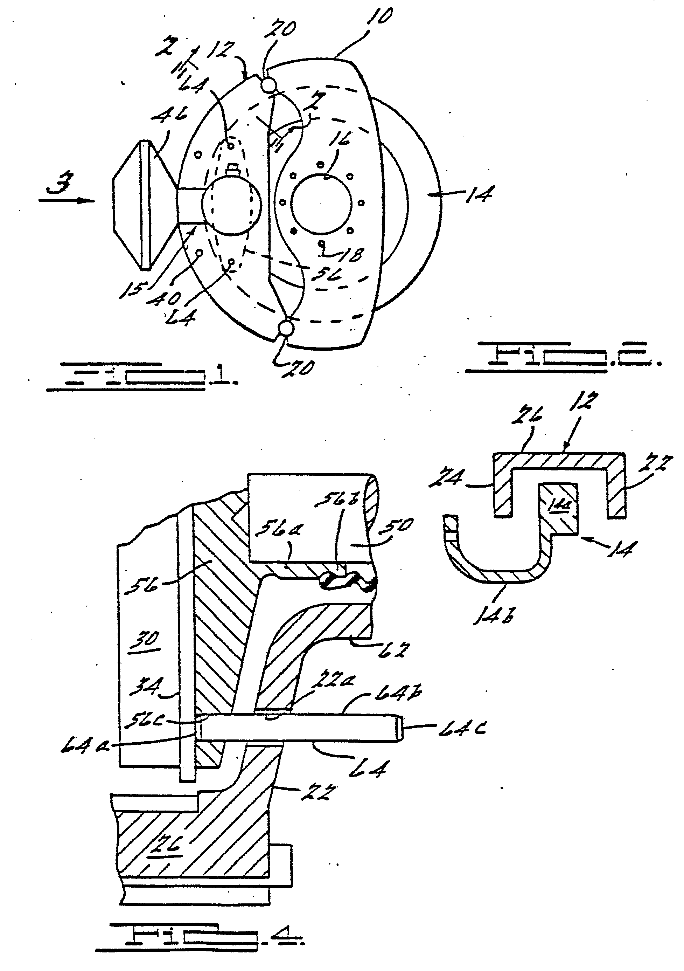

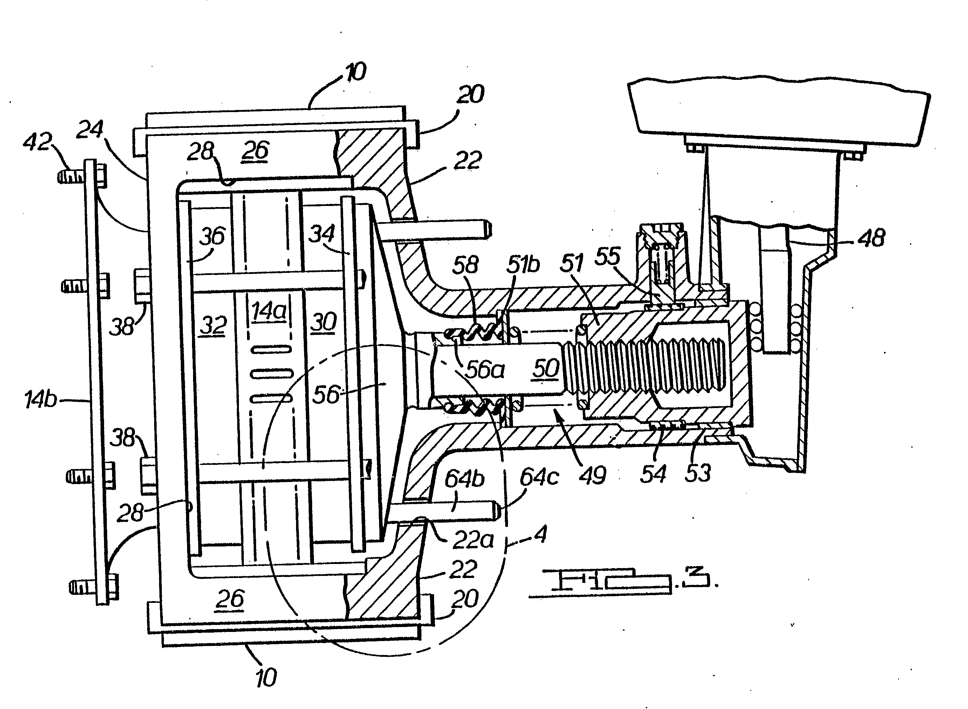

Caliper 12 is mounted on torque plate 10 for limited sliding translatory movement on the torque plate in a direction generally parallel to the axis of the axle assembly. Various arrangements may be employed to provide the required sliding mounting of the caliper on the torque plate. The disclosed arrangement includes a pair of upper and lower guide pins 20. Caliper 12, at the location of the section of Figure 2, is generally C-shaped and includes inboard and outboard web portion 22, 24 disposed generally normal to the wheel axis of the associated vehicle on opposite sides of disc 14, and a spacer portion 26 interconnecting the web portions. As best seen in Figure 3, caliper 12 is of the "open back" type, i.e. spacer portion 26 is not continuous but rather is broken to provide a window or opening 28 so that brake pads 30, 32 together with backing plates 34, 36 may be removed for replacement, without removing caliper 12, simply by removing a pair of bolts 38. Bolts 38 pass through outboard caliper web portion 24 and through suitable holes in backing plates 34, 36 for threaded engagement with threaded through bores 40 (Figure 1) in inboard caliper web portion 22. As is typical of "open back" caliper designs, the caliper being described has a considerable arcuate extent as compared to closed back designs. As shown, caliper 12 has an arcuate extent, as scribed from the center of opening 16, of approximately 130 degrees (Figure 1).

Disc 14, as best seen in Figure 3, includes a peripheral rim portion 14a received between inboard and outboard brake pads 30, 32 and a flange portion 14b. Flange portion 14b includes a plurality of bolt holes for securing disc 14 to a wheel (not shown) of an associated vehicle as by bolts 42.

Actuator assembly 15 is carried by inboard caliper web portion 22. Atuator assembly 15 is generally as described in US—A—3,966,028 and includes an actuator member 48 and a tappet or push rod assembly 49. Push rod assembly 49 includes a push rod 50 and an adjuster nut 51 threaded onto the inboard end of rod 50. Nut 51, and thereby push rod 50, is driven axially by a wedge portion of actuator member 48. An inboard bushing 53 journals the inboard end of push rod assembly 49, and a collar 54 is press fit on nut 51. Collar 54 is provided with an external helical ratchet thread and coacts with corresponding ratchet teeth on a spring loaded ratchet pawl 55 to provide, in known manner, automatic self-adjustment of the push rod assembly in response to brake pad wear. See, for example, U.S. Patent 3,068,964. The free or outboard end of push rod 50 is received with a press fit in a central hub portion 56a of a bridge bar 56 (see also Figure 4) which in turn acts against backing plate 34 of inboard brake pad 30 to press pad 30 against the inboard face of disc rim portion 14a and thereafter slide the caliper inboard, to the right as viewed in Figure 3, to in turn apply outboard pad 32 against the outboard face of disc rim portion 14a whereby to brake the wheel of the associated vehicle. A dust boot 58, secured at its outboard end to a flange portion 56a of bridge 56 and at its inboard end to a retainer ring 51b, precludes contamination of the interior of actuator assembly 15.

With particular reference now to Figures 3 and 4, a through axial bore 56c is provided in bridge bar 56 adjacent each end of the bar, and through axial bores 22a are provided in inboard caliper web portion 22 at opposite sides of tubular housing section 62 and in axial alignment with bores 56c. A steel indicator pin 64 is press fit at its outboard end 64a into each bore 56c and extends axially therefrom through the respective web portion bore 22a to project its inboard end 64b axially inwardly from the inboard face of web portion 22. Bores 22a are oversize with respect to pins 64. For example, if pins 64 are 11.10 mm in diameter, bores 22a should be approximately 13.50 mm in diameter to allow for a limited amount of "slop" in the overall system and preclude binding of the pins in the bores. The length of pins 64 is chosen such that the length of pin exposed inboard of web portion 22, with fresh pads 30 and 32 in place, is somewhat less than the combined thickness of fresh pads 30 and 32. The described arrangement will be seen to provide a positive positional relationship between the outboard ends of pins 64 and the inboard face of the inboard pad. As wear occurs in pads 30, 32, bridge bar 56 (by virtue of the self-adjusting action of pawl 55, collar 54, adjuster nut 51, and push rod 50) will follow pad 30 and, specifically, will move outboard, or to the left as viewed in Figure 3. At the same time, caliper 12 will move inboard along pins 20 in response to wear occurring in outboard pad 32. Both of these wear induced movements, i.e., the outboard movement of bridge bar 56 and the inboard movement of caliper 12, will have the effect of gradually swallowing pins 64 within caliper 12 and thereby gradually reducing the length of pin exposed. The length of pin exposed, and thereby the thickness of padding remaining, can be readily determined at any given time, either visually or tactilely. When the pads have worn down to what has been predetermined to be a minimum safe operating thickness, the pins will have been completely swallowed by the caliper so that the inboard tip 64c of the pins will be flush with the inboard face of inboard caliper web 22. When this flush configuration is observed or felt, it is time to change the pads. It will be apparent that the desired predetermined minimum pad thickness will dictate the amount by which the combined thickness of the fresh pads exceeds the length of originally exposed pin. For example, if the fresh pads are each 25.4 mm thick and it is desired to change pads when they wear down to a thickness of 3,18 mm, the length of pin originally exposed will be 44,45 mm.

In addition to providing an accurate and ready means of determining remaining pad thickness, pins 64, by virtue of their even spacing on either side of the central axis of push rod 50, also provide an effective outboard bearing for push rod assembly 49, thereby eliminating the need for the conventional outboard push rod assembly bushing. Pins 64 also provide a means of precluding rotation of push rod 50. Since the self adjusting mechanism requires that rod 50 be held against rotation, and thereby be axially advanced, as adjuster nut 51 is rotated by ratchet pawl 55, pins 64, by precluding such rotation, enable the operation of the self adjusting mechanism. Previous arrangements for precluding such rotation, such as interlocking connections between the bridge bar and the inboard backing plate, are also thereby obviated.

Although actuator assembly housing is shown having a section formed integrally with the caliper, it will be apparent that this housing section may be formed as a separate part and secured to the caliper as by bolting, in which event the bolt flange of the separate housing would, in effect, constitute a portion of the inboard web of the caliper and the indicator pins, even if arranged to pass through bores in the bolt flange of the separate housing, would still, in effect, be passing through bores in the inboard web of the caliper. Further, whereas a disc brake assemblage has been described having a self adjusting provision so that the bridge bar effectively follows the brake pads as the latter undergo wear, the invention is also applicable to a brake that does not include a self adjusting mechanism. The wear indicator, in the case of a non self adjusting brake, will provide an accurate indication of lining wear only when the brake is actually applied.

## Claims

1. A disc brake assemblage comprising a housing structure including a caliper housing section carrying inboard and outboard brake pads (30, 32) adapted to coact with the opposite faces of a brake disc (14) secured to a wheel of an associated vehicle and including inboard and outboard web portions (22, 24) to be disposed generally normal to the wheel axis of the associated vehicle on opposite sides of the brake disc, a generally tubular housing section (62) extending axially inwardly from the inboard face of said inboard web portion, a push rod (50) mounted within said tubular housing section for reciprocal brake apply and release movement along a line of action generally parallel to said axis and having a free, outboard end projecting through an aperture in said inboard web portion, a bridge bar (56) on the free outboard end of said push rod adapted to press the inboard brake pad against the inboard face of a brake disc in response to brake apply movement of an actuator member (48), in use of the assemblage, characterised by means (22a) defining a generally axially extending through bore in said inboard web portion (22) radially outwardly of said tubular housing section (62) and an indicator pin (64b) having its outboard end (64c) secured to said bridge bar and extending axially from that end through said bore to provide bearing support for the outboard end of said push rod and to project its inboard end (64c) axially inwardly from the inboard face of said inboard web portion radially outwardly of said tubular housing section and thereby provide, as a function of the length of pin exposed, a measure of the remaining thickness of the brake pads in use of the assemblage.

2. A disc brake assemblage as claimed in claim 1 wherein said bridge bar (56) and said push rod (50) form a T configuration, means define a pair of said generally axially extending through bores (22a) in said inboard web portion (22) on opposite sides of said tubular housing section (62) and a pair of said pins (64b) is provided secured at their outboard ends to laterally spaced locations on said bridge bar and extending axially therefrom respectively through said bores to project their inboard ends axially inwardly from the inboard face of said inboard web portion at opposite sides of said tubular housing section.

3. A disc brake assemblage as claimed in claim 2 wherein the outboard ends of said pins 64b are received with a press fit in through axial bores provided in said bridge bar adjacent each end of said bar.

4. A disc brake assemblage as claimed in any preceding claim wherein the push rod (50) has a coacting threaded member (51) threadably engaging the push rod at a location thereon inboard of said outboard end, said indicator pin or pins providing a means of precluding rotation of said push rod to enable axial movement of said push rod in response to rotation of said coacting threaded member in self adjusting constructions.

## Revendications

1. Un assemblage de frein à disque comprenant une structure de carter comportant une partie de carter d'étrier portant des patins de frein intérieur et extérieur (30, 32) agencés pour coopérer avec les faces opposées d'un disque de frein (14), fixé à une roue d'une véhicule associé et comportant des parties d'aile interne et externe (22, 24) conçues pour être disposées généralement perpendiculairement à l'axe de la roue de véhicule associé sur les côtés opposés du disque de frein, une partie de carter (62) généralement tubulaire s'étendant axialement vers l'intérieur à partir de la face intérieure de ladite partie d'aile intérieure, une tige-poussoir (50) montée à l'intérieur de ladite partie de carter tubulaire de manière à pouvoir effectuer un mouvement de serrage et de desserrage du frein suivant une ligne d'action généralement parallèle audit axe et ayant une extrémité extérieure libre faisant saillie à travers une ouverture formée dans ladite partie d'aile intérieure, une barre de liaison (56) montée sur l'extrémité extérieure libre de ladite tige-poussoir agencée pour presser le patin de frein intérieur contre la face intérieure d'un disque de frein en réponse à un déplacement de serrage du frein d'un organe d'actionnement (48, lorsque l'assemblage est en service, caractérisé par des moyens (22a) formant un alésage traversant s'étendant généralement axialement dans ladite partie d'aile intérieure (22) radialement à l'extérieur de ladite partie de carter tubulaire (62) et par une tige indicatrice (64) dont l'extrémité extérieure (64a) est fixée à ladite barre de liaison et qui s'étend axialement à partir de cette extrémité à travers ledit alésage pour fournir un support d'appui à l'extrémité extérieure de ladite tige-poussoir et de manière que son extrémité intérieure (64b) fasse saillie axialement vers l'intérieur au-delà de la face intérieure de ladite partie d'aile intérieure radialement à l'extérieur de ladite partie de carter tubulaire et fournisse, de ce fait, en fonction de la longueur de tige exposée, une mesure de l'épaisseur restante des patins de frein au cours de l'emploi de l'assemblage.

2. Un assemblage de frein à disque tel que revendiqué dans la revendication 1 dans lequel ladite barre de liaison (56) et ladite tige-poussoir (50) forment une configuration en T, des moyens formant une paire desdits alésages traversants (22a) s'étendant généralement axialement dans ladite partie d'aile intérieure (22) sur les côtés opposés de ladite partie de carter tubulaire (62) et une paire desdites tiges (64) est utilisée, les tiges étant fixées à leur extrémité extérieure à des emplacements latéralement espacés sur la barre de liaison et s'étendant axialement à partir de cette dernière à travers lesdits alésages de manière que leur extrémité intérieure fasse saillie axialement vers l'intérieur au-delà de la face intérieure de ladite partie d'aile intérieure sur les côtés opposés de ladite section de carter tubulaire.

3. Un assemblage de frein à disque tel que revendiqué dans la revendication 2 dans lequel les extrémités extérieures desdites tiges (64) sont reçues avec un adjustage à la presse dans des alésages axiaux traversants formés dans la barre de liaison au voisinage de chaque extrémité de ladite barre.

4. Un assemblage de frein à disque tel que revendiqué dans une quelconque revendication précédente dans lequel la tige-poussoir (50) comporte un organe fileté coopérant (51) vissé sur la tige-poussoir à un emplacement de cette dernière situé à l'intérieur par rapport à ladite extrémité extérieure, ladite ou lesdites tiges indicatrices fournissant un moyen pour empêcher la rotation de ladite tige-poussoir afin de permettre une mouvement axial de ladite tige-poussoir en réponse à la rotation dudit organe fileté coopérant dans ces constructions à réglage automatique.

Patentansprüche

1. Eine Scheibenbremsanordnung, die folgendes aufweist: ein Gehäusegebilde mit einem Umgreifgehäuseabschnitt, der geeignet ist, innere und äußere Bremskissen (30, 32) zur Zusammenarbeit mit entgegengesetzt liegenden Stirnflächen einer Bremsscheibe (14) zu tragen, die an einem Rad eines zugehörigen Fahrzeugs befestigt ist, und mit inneren und äußeren Stegteilen (22, 24) die im ganzen senkrecht zur Radachse des zugehörigen Fahrzeugs auf entgegengesetzt liegenden Seiten der Bremsscheibe angeordnet sind, einen im ganzen rohrförmigen sich axial nach innen von der Innenstirnfläche des Innenstegteils erstreckenden Gegäuseabschnitt (62), eine innerhalb des Gehäuseabschnitts angeordnete Schubstange (50) für eine hin- und hergehende Bremsanlage- und Freigabebewegung längs einer Wirkungslinie im allgemeinen parallel zur erwähnten Achse, und mit einem freien äußeren Ende, welches durch eine Öffnung in dem Innenstegteil ragt, eine Brückenstange (56) am freien äußeren Ende der Schubstange zum Drücken des inneren Bremskissens gegen die innere Stirnfläche einer Bremsscheibe infolge der Bremsanlagebewegung eines Betätigungsgliedes (48) beim Gebrauch der Anordnung, gekennzeichnet durch Mittel (22a), die folgendes definieren: eine sich im ganzen axial erstreckende Durchbohrung in dem inneren Stegteil (22) radial nach außen gegenüber dem rohrförmigen Gehäuseabschnitt (62) und ein Anzeigestift (64), der mit seinem äußeren Ende (64a) an der Brückenstange befestigt ist und sich von diesem Ende aus axial erstreckt, und zwar durch die erwähnte Bohrung zum Vorsehen einer Lagerhalterung für das äußere Ende der erwähnten Schubstange und um mit seinem inneren Ende (64b) axial nach innen gegenüber der inneren Stirnfläche des inneren Stegteils radial außerhalb des rohrförmigen Gehäuseabschnitts zu ragen und um dadurch als eine Funktion der freiliegenden Stiftlänge ein Maß für die verbleibende Dicke der Bremskissen beim Gebrauch der Anordnung vorzusehen.

2. Eine Scheibenbremsanordnung nach Anspruch 1, wobei die Brückenstange (56) und die Schubstange (50) eine T-Konfiguration bilden, wobei Mittel ein Paar der im ganzen sich axial erstreckenden Durchbohrungen (22a) in dem inneren Stegteil (22) definieren, und zwar auf entgegengesetzten Seiten des rohrförmigen Gehäuseabschnitts (62), und wobei ferner ein Paar dieser Stifte (64) vorgesehen sind, die an ihren äußeren Enden an seitlich mit Abstand angeordneten Stellen der Brückenstange befestigt sind und sich von dort aus jeweils axial erstrecken, und zwar durch die erwähnten Bohrungen, um mit ihren inneren Enden axial nach innen gegenüber der Innenstirnfläche des inneren Stegteils zu ragen, und zwar in entgegengesetzten Seiten des rohrförmigen Gehäuseabschnitts.

3. Eine Scheibenbremsanordnung nach Anspruch 2, wobei die äußeren Enden der Stifte (64) durch eine Preßpassung in axialen Durchbohrungen aufgenommen sind, die in der Brückenstange benachbart zu jedem Ende der Stange vorgesehen sind.

4. Eine Scheibenbremsanordnung nach irgendeinem der vorhergehenden Ansprüche, wobei die Schubstange (50) ein zusammenarbeitendes mit Gewinde versehenes Glied (51) aufweist, welches gewindemäßig mit der Schubstange in Eingriff steht, und zwar an einer Stelle darauf nach innen gegenüber dem äußeren Ende, und wobei der Anzeigestift oder die Stifte Mittel vorsehen, um die Drehung der Schubstange auszuschließen, um so eine axiale Bewegung der Schubstange infolge der Drehung des erwähnten zusammenarbeitenden mit Gewinde versehen Gliedes bei selbsteinstellenden Konstruktionen zu ermöglichen.

FIG.1.

FIG.2.

FIG.4.

FIG. 2